# EUROPÄISCHE PATENTSCHRIFT

(11) **EP 2 393 688 B1**
(45) Veröffentlichungstag und Bekanntmachung des Hinweises auf die Patenterteilung: **01.05.2013**
(21) Anmeldenummer: 10702490.3
(22) Anmeldetag: 04.02.2010
(51) Int. Cl.: B60L 11/02, H02K 5/20, H02K 9/16, F02B 63/00, F02B 53/14, F02B 63/04, F01C 21/06, F01C 13/00

(54) **STROMERZEUGUNGSAGGREGAT**
POWER GENERATION APPARATUS
GROUPE ÉLECTROGÈNE

(30) Priorität: 05.02.2009 AT 2012009; 02.04.2009 AT 5242009
(43) Veröffentlichungstag der Anmeldung: 14.12.2011
(60) Teilanmeldung: 13160336.7
(73) Patentinhaber: AVL List GmbH, 8020 Graz (AT)
(72) Erfinder: BENDA, Vincent, A-8047 HART BEI GRAZ (AT); FISCHER, Robert, A-8010 Graz (AT); GRAF, Bernhard, A-8045 Graz (AT); HUBMANN, Christian, A-8054 Graz (AT); KUNZEMANN, Ralf, A-8061 St. Radegund (AT); LIST, Helmut, A-8010 Graz (AT); HOHENBERG, Günter, A-8010 Graz (AT); WOLKERSTORFER,Josef, A-8045 Graz (AT)
(74) Vertreter: Babeluk, Michael
(86) Internationale Anmeldenummer: PCT/EP2010/051357
(87) Internationale Veröffentlichungsnummer: WO 2010/089347

(56) Entgegenhaltungen:
- EP-A1- 1 329 351
- WO-A1-95/19495
- WO-A1-03/091555
- DE-A1- 2 428 327
- DE-A1- 4 020 176
- DE-A1- 10 122 281
- DE-A1- 10 241 807
- DE-A1- 19 500 774
- DE-A1-102005 062 529
- DE-A1-102007 043 610
- US-B1- 6 698 395

## Beschreibung

Die Erfindung betrifft ein Stromerzeugungsaggregat, insbesondere zur Reichweitenerweiterung eines elektrisch betriebenen Fahrzeuges, mit einer Brennkraftmaschine und einem Generator, welcher achsgleich zur Abtriebswelle der Brennkraftmaschine angeordnet ist, wobei Brennkraftmaschine und Generator in einem kühlluftdurchströmten Gehäuse angeordnet sind.

Aus der US 2005/0279542 A1 ist ein autonom betreibbares tragbares Stromerzeugungsaggregat bekannt, welches dazu dient, die Reichweite eines Elektrofahrzeuges auszudehnen. Das Stromerzeugungsaggregat weist eine Brennkraftmaschine und einen koaxial zu dieser angeordneten Generator auf, wobei Brennkraftmaschine und Generator in einem gemeinsamen Gehäuse angeordnet sind. Das gemeinsame Gehäuse, welches durch eine Trennwand in zwei Bereich unterteilt ist, wird von Kühlluft durchströmt, wobei die Kühlluft im Bereich des Generators in das Gehäuse ein- und am brennkraftmaschinenseitigen Ende des Gehäuses wieder ausströmt. Für die Förderung der Kühlluft weist der Rotor des Generators sowie die Abtriebswelle der Brennkraftmaschine Gebläseflügel auf.

Die US 7,049,707 B2 offenbart ein Stromerzeugungsaggregat, bestehend aus einer Brennkraftmaschine und einem Generator, welche über eine gemeinsame Welle miteinander verbunden sind. Brennkraftmaschine und Generator sind in einem gemeinsamen Gehäuse angeordnet, welches auf der Seite des Generators und auf der Seite der Brennkraftmaschine Eintrittsöffnungen für Kühlluft aufweist, wobei die Kühlluft durch Gebläserotoren gefördert wird.

Aus der DE 10 2005 062 529 A1 ist eine Schwenkkolbenmaschine bekannt, welche einen Verbrennungsmotorteil mit einem Gehäuse aufweist. An dem Verbrennungsmotorteil schließt sich in Richtung der Drehachse ein elektromotorischer Teil an, der in einem an das Gehäuseteil des Verbrennungsmotorteils anschließenden Gehäuseteil angeordnet ist.

Die US 6,698,395 B1 offenbart einen Hybridmotor mit einem elektrischen Generator, einem Elektromotor und einer Drehkolbenbrennkraftmaschine.

Weiters wird in der DE 39 30 901 A1 ein Maschinenaggregat bestehend aus einer Rotationskolbenbrennkraftmaschine und einem Rotationskolbenkompressor, sowie einem Generator beschrieben. Der Kompressor und der Stromgenerator werden über Riemenantriebe durch die Brennkraftmaschine angetrieben. Weiters treibt die Brennkraftmaschine über ein Kardangelenk und eine unverdrehbar in sich längsverschiebbare Antriebswelle ein Lüfterrad an. Die Brennkraftmaschine kann über einen im Strom des Lüfterrades liegenden Kühler gekühlt werden. Das Maschinenaggregat ist als transportables Gerät für den Einsatz bei Katastrophenfällen oder für militärische Zwecke bestimmt.

Bekannte Stromerzeugungsaggregate haben den Nachteil, dass sie relativ unhandlich und schwer sind und viel Bauraum beanspruchen. Trotz bekannter Bemühungen, durch schalldämmende Kapselungen oder dergleichen, eine Geräuschverminderung zu erreichen, weisen herkömmliche Stromerzeugungsaggregate ein relativ hohes Betriebsgeräusch auf. Daher sind herkömmliche Stromerzeugungsaggregate nur bedingt im Einsatz in Kraftfahrzeugen, insbesondere in Elektrokraftfahrzeugen geeignet.

Stromerzeugungsaggregate, welche als sogenannten Range-Extender für Elektrofahrzeuge eingesetzt werden, sollen möglichst geräuscharm betrieben werden können, wenig Bauraum in Anspruch nehmen und geringes Gewicht aufweisen und trotzdem eine hohe Leistungsdichte aufweisen. Diese Anforderungen werden mit bekannten Stromerzeugungsaggregaten nur teilweise erfüllt.

Aufgabe der Erfindung ist es daher, ein Stromerzeugungsaggregat zu entwickeln, welches die genannten Anforderungen erfüllt und eine hohe Leistungsdichte bei geringem Betriebsgeräusch aufweist. Darüber hinaus soll das Stromerzeugungsaggregat kompakt ausgeführt sein und geringes Gewicht aufweisen, so dass es in einfacher Weise in herkömmliche Elektrofahrzeugkonzeptionen mit möglichst wenig zusätzlichem Aufwand integriert werden kann.

Erfindungsgemäß wird dies dadurch erreicht, dass Brennkraftmaschine und Generator als Einheit ausgebildet und in einem im Wesentlichen rohrförmigen, durch ein Innengehäuse gebildeten Kühlraum des Gehäuses angeordnet sind, wobei in den Kühlraum auf der Seite des Generators, vorzugsweise etwa im Bereich der Abtriebswellenachse, ein Zuluftkanal einmündet und vom Kühlraum auf der Seite der Brennkraftmaschine, vorzugsweise im Bereich der Abtriebswellenachse ein Abluftkanal ausgeht und wobei die Brennkraftmaschinen-Generator-Einheit über schalldämmende Motorlager im Gehäuse gelagert ist.

Die Brennkraftmaschinen-Generator-Einheit wird somit von einem Luftströmungsmantel umgeben, was sich vorteilhaft auf die Schallabstrahlung auswirkt.

Um das Betriebsgeräusch weiter zu minimieren und eine ausreichende Kühlung der Einheit zu gewährleisten, ist es vorteilhaft, wenn die Brennkraftmaschine wassergekühlt ist und im Kühlraum zumindest ein Luft/Wasser-Wärmetauscher - vorzugsweise bezogen auf die Abtriebswellenachse - beidseits der Brennkraftma schine jeweils Luft/Wasser-Wärmetauscher angeordnet ist, wobei vorzugsweise die Brennkraftmaschine als Kreiskolbenmotor ausgebildet ist.

Eine äußerst kompakte Bauweise lässt sich erreichen, wenn - in einer Draufsicht betrachtet - der Zuluftkanal, der Kühlraum und der Abluftkanal "S"-förmig angeordnet sind.

Um einen ausreichenden Kühlluftdurchsatz zu realisieren, ist vorgesehen, dass - in Bezug auf die Luftströmung - stromaufwärts des Generators im Kühlraum ein Gebläse angeordnet ist, dessen Laufrad achsgleich mit der Abtriebswellenachse angeordnet ist, wobei vorzugsweise - auf die Luftströmung bezogen - stromabwärts des Austrittes des Gebläses ein Ansaugstutzen der Brennkraftmaschine im Kühlraum angeordnet ist. Dadurch, dass der Ansaugstutzen stromabwärts des Gebläselaufrades angeordnet ist, wird bereits vorverdichtete Luft angesaugt, was sich vorteilhaft auf die Motorleistung auswirkt.

Eine äußerst kompakte und schallarme Konzeption lässt sich erreichen, wenn vorzugsweise stromabwärts der Luft/Wasser-Wärmetauscher ein Abgaskanal der Brennkraftmaschine vorzugsweise im Bereich der Abtriebswellenachse in den Abluftkanal einmündet. Dadurch, dass die Abgase in die Kühlluft eingeblasen werden, lässt sich die Schallabstrahlung weiters absenken.

Ein äußerst geringes Bauvolumen und eine minimale Anzahl an Bauteilen lässt sich erreichen, wenn ein kraftgebender Teil der Brennkraftmaschine und ein stromerzeugender Teil des Generators, insbesondere der Rotor des Generators eine gemeinsame Welle aufweisen, wobei es besonders vorteilhaft ist, wenn der Rotor des Generators mit einer ersten Ausgleichsmasse für den Massenausgleich verbunden ist oder mit diesem eine Einheit bildet. Im Rahmen der Erfindung kann weiters vorgesehen sein, dass ein Gehäuse des Generators und ein abtriebseitiger Gehäuseteil der Brennkraftmaschine eine Einheit bilden, vorzugsweise einteilig ausgeführt sind. Dies ermöglicht eine sehr kompakte und geräuscharme Ausführung.

Weiters kann zur Einsparung von Bauteilen und Bauraum in einer sehr schallarmen Konzeption vorgesehen sein, dass zumindest auf einer Seite des Kühlraumes, des Zuluftkanals und des Abluftkanals, ein vorzugsweise in das Gehäuse integrierter Kraftstofftank angeordnet ist.

In weiterer Ausführung der Erfindung kann vorgesehen sein, dass zumindest auf einer Seite des Kühlraumes, des Zuluftkanals und des Abluftkanals, ein vorzugsweise in das Gehäuse integrierter Kraftstofftank angeordnet ist. Das Stromerzeugungsaggregat bildet somit samt Kraftstofftank eine abgeschlossene Baueinheit und kann auch als auswechselbarer Modul konzipiert werden, welcher in einem vorbestimmten Fahrzeugraum bei Bedarf eingesetzt oder entfernt werden kann.

Eine platzsparende Konstruktion lässt sich verwirklichen, wenn eine erste Ausgleichsmasse am Rotor des Generators angeordnet ist, welche vorzugsweise integral mit dem Rotor ausgebildet ist, wobei vorzugsweise die Antriebswelle an einem dem ersten Ende abgewandten zweiten Ende eine zweite Ausgleichsmasse aufweist.

Dadurch, dass die erste Ausgleichsmasse in den Rotor des Generators integriert ist, kann das Stromerzeugungsaggregat sehr kompakt und gewichtsarm ausgeführt werden.

Eine äußerst kompakte und schallarme Konzeption lässt sich erreichen, wenn sowohl die Brennkraftmaschine, als auch der Generator wassergekühlt ist, wobei das Gehäuse der Brennkraftmaschine und das Gehäuse des Generators integrierte Kühlkanäle aufweisen, wobei die Kühlkanäle der Brennkraftmaschine und die Kühlkanäle des Generators leitungslos miteinander strömungsverbunden sind. Dabei ist es besonders vorteilhaft, wenn das Gehäuse des Generators direkt an das Gehäuse der Brennkraftmaschine anschließt, wobei vorzugsweise das Gehäuse des Generators integral mit dem Gehäuse der Brennkraftmaschine ausgebildet ist.

Eine besonders kompakte und leicht gewichtige Bauweise wird ermöglicht, wenn im Bereich des zweiten Endes der Antriebswelle eine Ölpumpe angeordnet ist, deren Laufrad mit der Antriebswelle drehverbunden ist, wobei vorzugsweise die Ölpumpe zwischen der Brennkraftmaschine und der zweiten Ausgleichsmasse angeordnet ist.

Die Erfindung wird im Folgenden anhand der Figuren näher erläutert. Es zeigen:
- Fig. 1: das erfindungsgemäße Stromerzeugungsaggregat in einem Längsschnitt; und
- Fig. 2: eine Brennkraftmaschinen-Generator-Einheit des Stromerzeugungsaggregates in einem Längsschnitt.

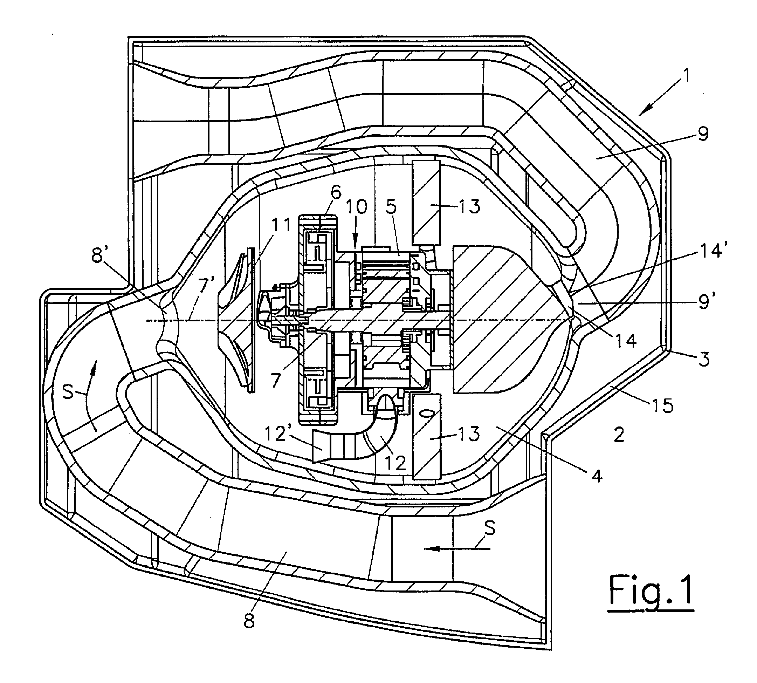

Fig. 1 zeigt ein Stromerzeugungsaggregat 1 mit einem inneren Gehäuse 2 und einem äußeren Gehäuse 3. Das innere Gehäuse 2 bildet einen Kühlraum 4 aus, in welchem eine Brennkraftmaschine 5 und ein Generator 6 angeordnet sind, wobei der Generator 6 mit der Abtriebswelle 7 der Brennkraftmaschine 5 drehverbunden ist. Die Brennkraftmaschine 5 ist im Ausführungsbeispiel durch einen Kreiskolbenmotor gebildet. Der Kühlraum 4 ist im Wesentlichen rohrförmig ausgebildet, wobei generatorseitig ein Zuluftkanal 8 etwa im Bereich der Abtriebswellenachse 7' in den Kühlraum 4 einmündet. Auf der Seite der Brennkraftmaschine 5 geht vom Kühlraum 4 im Bereich der Abtriebswellenachse 7' ein Abluftkanal 9 aus. Zuluftkanal 8, Kühlraum 4 und Abluftkanal 9 bilden in der in Fig. 1 dargestellten Schnittdarstellung bzw. einer Draufsicht auf das Stromerzeugungsaggregat die Form eines "S", so dass eine äußerst kompakte Packung erreicht werden kann.

Die durch Brennkraftmaschine 5 und Generator 6 gebildete Brennkraftmaschinen-Generator-Einheit 10 ist über schwingungsdämpfende Motorlager im Innengehäuse 2 abgestützt. Auf der Seite der Mündung 8' der Zuluftleitung 8 in den Kühlraum 4 ist ein Gebläselaufrad 11 angeordnet, welches durch die Abtriebswelle 7 angetrieben wird. Durch das Gebläselaufrad 11 wird ein Luftstrom entsprechend den Pfeilen S im Zuluftkanal 8, Kühlraum 4 und in der Abluftkanal 9 erzeugt, wobei die Brennkraftmaschinen-Generator-Einheit 10 in Form einer Mantelströmung umströmt wird.

Stromabwärts des Gebläselaufrades 11 ist die Ansaugöffnung 12' einer Ansaugleitung 12 der Brennkraftmaschine 5 angeordnet. Dadurch kann bereits durch das Gebläselaufrad 11 vorverdichtete Luft von der Brennkraftmaschine 5 angesaugt werden, was sich vorteilhaft auf die Motorleistung auswirkt.

Die Brennkraftmaschine 5 ist wassergekühlt ausgeführt. Zur optimalen Kühlung der Brennkraftmaschine 5 sind im Kühlraum 4 beidseits der Abtriebswellenachse 7' Luft/Wasser-Wärmetauscher 13 angeordnet, welche durch die Kühlluft S angeströmt werden. Im Bereich des Austrittes 9' der Austrittsleitung 9 aus dem Kühlraum 4 ist die Mündung 14' einer Abgasleitung 14 der Brennkraftmaschine 5 angeordnet, so dass die Abgase direkt in den Kühlluftstrom S eingebracht werden und sich mit der Kühlluft vermischen. Dies ermöglicht einerseits eine Abkühlung der Abgase und andererseits eine wirksame Reduktion der Schallabstrahlung.

In das äußere Gehäuse 3 des Stromerzeugungsaggregates 1 ist ein Kraftstofftank 15, zumindest auf einer Seite des Kühlraumes 4, in das Stromerzeugungsaggregat 1 integriert.

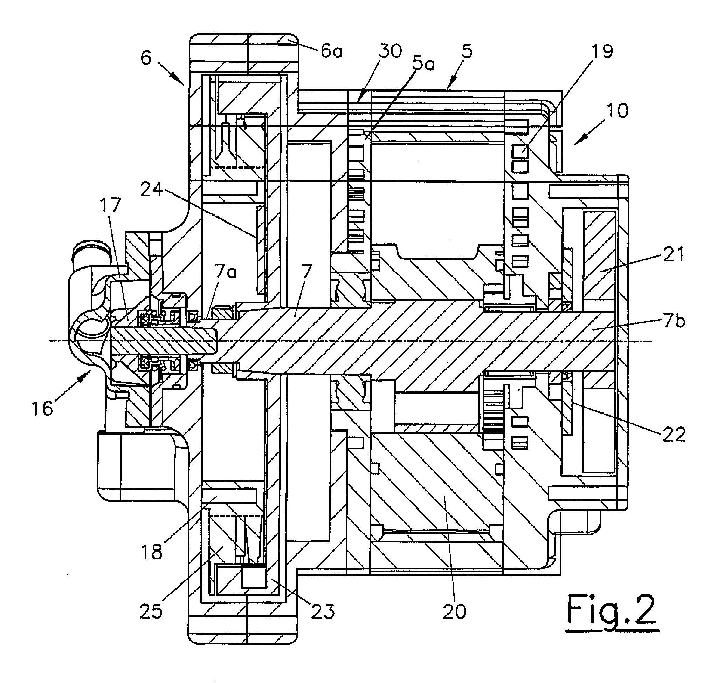

Wie aus Fig. 2 erkennbar, ist in die Brennkraftmaschinen-Generator-Einheit 10 im Bereich eines ersten Endes 7a der Abtriebswelle 7 eine Kühlmittelpumpe 16 integriert, deren Laufrad 17 mit der Abtriebswelle 7 drehverbunden ist. Die Kühlmittelpumpe 16 ist auf der der Mündung 8' der Frischluftleitung 8 zugewandten Seite der Brennkraftmaschinen-Generator-Einheit 10 angeordnet. Das Kühlwasser gelangt aus der Kühlmittelpumpe 16 in nur zum Teil in Fig. 2 ersichtliche Wasserräume 18 des Generators 6 und 19 der Brennkraftmaschine 5 und wird danach den Luft/Wasser-Wärmetauschern 13 zugeführt. Ein Gehäuseteil 5a der Brennkraftmaschine 1 und ein Gehäuse 6a des Generators 6 schließen unmittelbar aneinander an und weisen ein gemeinsames Kühlsystem 30 auf, wobei die Kühlkanäle 18, 19 des Generators 6 und der Brennkraftmaschine 5 ohne separate Leitungen direkt mit einander strömungsverbunden sind.

Die Brennkraftmaschinen-Generator-Einheit 10 ist in sich völlig ausgeglichen, wobei die Unwucht der exzentrischen Abtriebswelle 7 durch eine in den Rotor 23 des Generators 6 integrierte erste Ausgleichsmasse 24, sowie durch eine mit der Abtriebswelle 7 im Bereich eines zweiten Endes 7b drehverbundene zweite Ausgleichsmasse 21 auf der Seite der Ölpumpe 22 ausgeglichen wird. Mit Bezugszeichen 20 ist der Kreiskolben der Brennkraftmaschine 5 angedeutet. Die Ölpumpe 22 ist an dem der Kühlmittelpumpe 16 entgegengesetzten Ende der Abtriebswelle 7 angeordnet.

Bezugszeichen 25 zeigt den Stator des Generators 6 an.

Das äußerst kompakte Stromerzeugungsaggregat 1 ist als Modul aufgebaut und kann somit bei Bedarf in entsprechende Räume eines Elektrofahrzeuges eingesetzt werden, um dessen Reichweite zu erweitern. Die kompakte Bauweise und die hohe Leistungsdichte erlauben es, das Stromerzeugungsaggregat als Range-Extender in bereits vorhandene Konzepte von Elektrofahrzeugen ohne wesentliche Verminderung des Nutzraumes und/oder ohne wesentliche Erhöhung des Baugewichtes einzusetzen.

## Patentansprüche

1. Stromerzeugungsaggregat (1), insbesondere zur Reichweitenerweiterung eines elektrisch betriebenen Fahrzeuges, mit einer Brennkraftmaschine (5) und einem Generator (6), welcher achsgleich zur Abtriebswelle (7) der Brennkraftmaschine (5) angeordnet ist, wobei Brennkraftmaschine (5) und Generator (6) in einem kühlluftdurchströmten Gehäuse (2, 3) angeordnet sind, **dadurch gekennzeichnet, dass** Brennkraftmaschine (5) und Generator (6) als Einheit (10) ausgebildet und in einem im Wesentlichen rohrförmigen, durch ein inneres Gehäuse gebildeten Kühlraum (4) angeordnet sind, wobei in den Kühlraum (4) auf der Seite des Generators (6), vorzugsweise etwa im Bereich der Abtriebswellenachse (7'), ein Zuluftkanal (8) einmündet und vom Kühlraum (4) auf der Seite der Brennkraftmaschine (5), vorzugsweise im Bereich der Abtriebswellenachse (7') ein Abluftkanal (9) ausgeht und wobei die Brennkraftmaschinen-Generator-Einheit (10) über schalldämmende Motorlager im Gehäuse (2, 3) gelagert ist.

2. Stromerzeugungsaggregat (1) nach Anspruch 1, **dadurch gekennzeichnet, dass** die Brennkraftmaschine (5) wassergekühlt ist und im Kühlraum (4) zumindest ein Luft/Wasser-Wärmetauscher (13) - vorzugsweise bezogen auf die Abtriebswellenachse (7') - beidseits der Brennkraftmaschine (5) jeweils Luft/Wasser-Wärmetauscher (13) angeordnet ist.

3. Stromerzeugungsaggregat (1) nach Anspruch 1 oder 2, **dadurch gekennzeichnet, dass** - in einer Draufsicht betrachtet - der Zuluftkanal (8), der Kühlraum (4) und der Abluftkanal (9) "S"-förmig angeordnet sind.

4. Stromerzeugungsaggregat (1) nach einem der Ansprüche 1 bis 3, **dadurch gekennzeichnet, dass** - in Bezug auf die Luftströmung (S) - stromaufwärts des Generators (6) im Kühlraum (4) ein Gebläse angeordnet ist, dessen Gebläselaufrad (11) vorzugsweise achsgleich mit der Abtriebswellenachse (7') angeordnet ist.

5. Stromerzeugungsaggregat (1) nach Anspruch 4, **dadurch gekennzeichnet, dass** - bezogen auf die Luftströmung (S) - stromabwärts des Austrittes des Gebläses eine Ansaugöffnung (12') einer Ansaugleitung (12) der Brennkraftmaschine (5) im Kühlraum (4) angeordnet ist.

6. Stromerzeugungsaggregat (1) nach einem der Ansprüche 1 bis 5, **dadurch gekennzeichnet, dass** vorzugsweise stromabwärts der Luft/Wasser-Wärmetauscher (13) eine Abgasleitung (14) der Brennkraftmaschine (5) vorzugsweise im Bereich der Abtriebswellenachse (7') in den Abluftkanal (9) einmündet.

7. Stromerzeugungsaggregat (1) nach einem der Ansprüche 1 bis 6, **dadurch gekennzeichnet, dass** die Brennkraftmaschine (5) als Kreiskolbenmotor ausgebildet ist.

8. Stromerzeugungsaggregat (1) nach einem der Ansprüche 1 bis 7, **dadurch gekennzeichnet, dass** ein kraftgebender Teil der Brennkraftmaschine und ein stromerzeugender Teil des Generators (6), insbesondere der Rotor (23) des Generators (6) eine gemeinsame Welle aufweisen.

9. Stromerzeugungsaggregat (1) nach einem der Ansprüche 1 bis 8, **dadurch gekennzeichnet, dass** der Rotor (23) des Generators (6) mit einer ersten Ausgleichsmasse (24) für den Massenausgleich verbunden ist oder mit diesem eine Einheit bildet.

10. Stromerzeugungsaggregat (1) nach einem der Ansprüche 1 bis 9 , **dadurch gekennzeichnet, dass** ein Gehäuse (6a) des Generators (6) und ein abtriebseitiger Gehäuseteil (5a) der Brennkraftmaschine (5) eine Einheit bilden, vorzugsweise einteilig ausgeführt sind.

11. Stromerzeugungsaggregat (1) nach Anspruch 10, **dadurch gekennzeichnet, dass** das Gehäuse (6) und der abtriebseitige Gehäuseteil (5a) des Brennkraftmaschine (5) ein gemeinsames Kühlsystem (30) aufweisen.

12. Stromerzeugungsaggregat (1) nach einem der Ansprüche 1 bis 11, **dadurch gekennzeichnet, dass** zumindest auf einer Seite des Kühlraumes (4), des Zuluftkanals (8) und des Abluftkanals (9), ein vorzugsweise in das Gehäuse (2, 3) integrierter Kraftstofftank (15) angeordnet ist.

13. Stromerzeugungsaggregat (1) nach einem der Ansprüche 1 bis 8, **dadurch gekennzeichnet, dass** es durch ein tragbares und auswechselbares Modul gebildet ist und das Modul Andockeinrichtungen und/oder elektrische Schnittstellen zur Verbindung mit und zum Einbau in einem Elektrofahrzeug aufweist.

## Claims

1. A power generation apparatus (1), in particular for expanding the range of an electrically operated vehicle, having an internal combustion engine (5) and a generator (6), which is situated coaxially to the output shaft (7) of the internal combustion engine (5), internal combustion engine (5) and generator (6) being situated in a housing (2, 3), through which cooling air flows, **characterised in that** internal combustion engine (5) and generator (6) are implemented as a unit (10) and are situated in a substantially tubular cooling chamber (4) formed by an inner housing, an intake air duct (8) opening into the cooling chamber (4) on the side of the generator (6), preferably approximately in the area of the output shaft axis (7'), and an exhaust air duct (9) originating from the cooling chamber (4) on the side of the internal combustion engine (5), preferably in the area of the output shaft axis (7'), and the internal combustion engine-generator unit (10) being mounted in the housing (2, 3) via noise-damping engine bearings.

2. The power generation apparatus (1) according to claim 1, **characterised in that** the internal combustion engine (5) is water-cooled and at least one air/water heat exchanger (13) is situated in the cooling chamber (4) - preferably, in relation to the output shaft axis (7') - air/water heat exchangers (13) are situated on both sides of the internal combustion engine (5).

3. The power generation apparatus (1) according to claim 1 or 2, **characterised in that** the intake air duct (8), the cooling chamber (4), and the exhaust air duct (9) are situated in an "S" shape - viewed in horizontal projection.

4. The power generation apparatus (1) according to one of claims 1 to 3, **characterised in that** - in relation to the air flow (S) - a fan is situated upstream from the generator (6) in the cooling chamber (4), whose fan rotor (11) is preferably situated coaxially with the output shaft axis (7').

5. The power generation apparatus (1) according to claim 4, **characterised in that** - in relation to the air flow (S) - an intake opening (12') of an intake line (12) of the internal combustion engine (5) is situated in the cooling chamber (4) downstream from the exit of the fan.

6. The power generation apparatus (1) according to one of claims 1 to 5, **characterised in that** an exhaust gas line (14) of the internal combustion engine (5) opens into the exhaust air duct (9), preferably in the area of the output shaft axis (7'), and preferably downstream from the air/water heat exchanger (13).

7. The power generation apparatus (1) according to one of claims 1 to 6, **characterised in that** the internal combustion engine (5) is implemented as a rotary piston engine.

8. The power generation apparatus (1) according to one of claims 1 to 7, **characterised in that** a force-providing part of the internal combustion engine and a power-generating part of the generator (6), in particular the rotor (23) of the generator (6), have a common shaft.

9. The power generation apparatus (1) according to one of claims 1 to 8, **characterised in that** the rotor (23) of the generator (6) is connected to a first balancing mass (24) for the mass balancing or forms a unit therewith.

10. The power generation apparatus (1) according to one of claims 1 to 9, **characterised in that** a housing (6a) of the generator (6) and an output-side housing part (5a) of the internal combustion engine (5) form a unit, and are preferably implemented integrally.

11. The power generation apparatus (1) according to claim 10, **characterised in that** the housing (6) and the output-side housing part (5a) of the internal combustion engine (5) have a common cooling system (30).

12. The power generation apparatus (1) according to one of claims 1 to 11, **characterised in that** a fuel tank (15), which is preferably integrated in the housing (2, 3), is situated at least on one side of the cooling chamber (4), the intake air duct (8), and the exhaust air duct (9).

13. The power generation apparatus (1) according to one of claims 1 to 8, **characterised in that** it is formed by a portable and replaceable module and the module has docking units and/or electrical interfaces for connection to and for installation in an electric vehicle.

## Revendications

1. Groupe électrogène (1), notamment pour augmenter le rayon d'action d'un véhicule à entraînement électrique comprenant un moteur thermique (5) et un générateur (6), le générateur étant coaxial à l'arbre de sortie (7) du moteur thermique (5),
- le moteur thermique (5) et le générateur (6) étant logés dans un carter (2, 3) traversé par l'air de refroidissement,
groupe électrogène **caractérisé en ce que**
- le moteur thermique (5) et le générateur (6) constituant une unité (10), et logés dans une chambre de refroidissement (4) essentiellement tubulaire formée par un carter intérieur,
- la chambre de refroidissement (4) débouchant sur le côté du générateur (6), de préférence sensiblement dans la région de l'axe (7') de l'arbre de sortie par un canal d'alimentation en air (8) et sortant de la chambre de refroidissement (4) du côté du moteur thermique (5), de préférence dans la région de l'axe (7') de l'arbre de sortie par un canal de sortie d'air (9), et
- l'unité moteur thermique-générateur (10) est montée dans le carter (2, 3) par l'intermédiaire de paliers de moteur d'isolation phonique.

2. Groupe électrogène (1) selon la revendication 1,
**caractérisé en ce que**
le moteur thermique (5) est refroidi à l'eau et la chambre de refroidissement (4), a au moins un échangeur de chaleur air/eau (13) et (de préférence rapporté à l'axe (7') de l'arbre de sortie) de part et d'autre du moteur thermique (5), un échangeur de chaleur air/eau (13).

3. Groupe électrogène (1) selon la revendication 1 ou 2,
**caractérisé en ce que**
en vue de dessus, le canal d'alimentation en air (8), la chambre de refroidissement (4) et le canal de sortie d'air (9) ont un tracé en forme de S.

4. Groupe électrogène (1) selon l'une des revendications 1 à 3,
**caractérisé en ce que**
selon le chemin de circulation d'air en S, en amont du générateur (6), un ventilateur est installé dans la chambre de refroidissement (4) dont le rotor (11) est de préférence coaxial à l'axe (7') de l'arbre de sortie.

5. Groupe électrogène (1) selon la revendication 4,
**caractérisé en ce que**
par rapport au chemin de circulation d'air en S, en aval de la sortie du ventilateur, il est prévu un orifice d'aspiration (12') d'une conduite d'aspiration (12) du moteur thermique (5) dans la chambre de refroidissement (4).

6. Groupe électrogène (1) selon l'une des revendications 1 à 5,
**caractérisé en ce que**
de préférence en aval de l'échangeur de chaleur air/eau (13), une conduite de gaz d'échappement (14) du moteur thermique (5) débouche dans le canal de sortie d'air (9), de préférence dans la région de l'axe (7') de l'arbre de sortie.

7. Groupe électrogène (1) selon l'une des revendications 1 à 6,
**caractérisé en ce que**
le moteur thermique (5) est un moteur à pistons rotatifs.

8. Groupe électrogène (1) selon l'une des revendications 1 à 7,
**caractérisé en ce que**
la partie motrice du moteur thermique et la partie génératrice du générateur (6), notamment le rotor (23) du générateur (6), ont un axe commun.

9. Groupe électrogène (1) selon l'une des revendications 1 à 8,
**caractérisé en ce que**
le rotor (23) du générateur (6) porte une première masse d'équilibrage (24) ou fait corps avec celle-ci pour équilibrer les masses.

10. Groupe électrogène (1) selon l'une des revendications 1 à 9,
**caractérisé en ce qu'**
un boîtier (6a) du générateur (6) et une partie de boîtier (5a) côté sortie du moteur thermique (5) forment une unité en étant de préférence réalisés en une seule pièce.

11. Groupe électrogène (1) selon la revendication 10,
**caractérisé en ce que**
le boîtier (6) et la partie de boîtier, côté sortie, (5a) du moteur thermique (5) ont un système de refroidissement commun (30).

12. Groupe électrogène (1) selon l'une des revendications 1 à 11,
**caractérisé en ce qu'**
au moins sur un côté de la chambre de refroidissement (4), du canal d'alimentation d'air (8) et du canal de sortie d'air (9), il est prévu un réservoir de carburant (15), de préférence intégré dans le boîtier (2, 3).

13. Groupe électrogène (1) selon l'une des revendications 1 à 8,
**caractérisé en ce qu'**
il est formé par un module portatif et amovible comportant des installations d'accouplement et/ou des interfaces électriques pour être reliées et installées dans un véhicule électrique.
